# EUROPEAN PATENT APPLICATION

(11) **EP 2 030 508 A1**
(43) Date of publication of application: **04.03.2009**
(21) Application number: 07114037.0
(22) Date of filing: 08.08.2007
(51) Int. Cl.: A23D 9/00, A23G 1/36, A23G 1/38

(54) **Reduced fat content products, with low saturated and trans unsaturated fat content**

(71) Applicant: Fuji Oil Europe, B-9042 Gent (BE)
(72) Inventor: Cleenewerck, Bernard, B-9185, Wachtebeke (BE)
(74) Representative: Luys, Marie-José A.H.

(57) **Abstract**

The present invention relates to food product with a hard texture at room temperature, containing
- between 5 and 90% of a fat phase
- between 3 and 70% of a fat replacer
- between 0 and 15% of water
- between 0 and 85% of a filler material
whereby the fat phase contains at least one fat composition containing
- between 0 and 65 wt% of at least one liquid oil with a saturated fatty acid content of less than 25 wt. % with respect to the weight of the liquid oil
- between 35 and 100 wt. % of a hard fat component with a StOSt/POP ratio of at least 2, preferably at least 2.5, most preferably at least 3.0, wherein St is stearic acid, P is Palmitic acid and O is Oleic acid.
and whereby the weight ratio of the fat replacer content versus the fat content in the total product is at least 0.1, preferably at least 0.15, more preferably at least 0.2. The present invention also relates to a process for producing such a food product.

## Description

The present invention relates to a food product which has a hard texture at room temperature. The present invention also relates to glyceride compositions suitable for use in such a food product and to processes for producing such a food product.

### 1. Background of the invention.

In a wide variety of food products, fat is used as a major component not only because of its nutritional importance, but also because of its wide range of functional properties. Fat has been found to be an ingredient which may be suitably combined with a wide variety of dry ingredients, often powdery ingredients. In these applications the fat will mostly be added in the liquid state or under shortenised form to a homogeneous mass of the dry ingredients. In other applications fat is combined with water and some dry ingredients. A homogeneous product is obtained when emulsifying the fat with the water.

One of the most important functional properties of the fat is its effect on the structure of the final food product in which it is incorporated. The structure of a product depends on both its recipe - i.e. the amount and nature of the fat and the other ingredients - and on the process according to which the product is made. For example processing steps such as emulsification, heating, tempering, influence the structure of the product obtained.

An example of a food product where the nature of the incorporated fat has a prominent effect on the structure is chocolate. Chocolate has a hard structure because of the incorporation of cocoa butter which is a hard fat; confectionery creams like medium hard sandwich creams contain a medium hard fat; spreads for example chocolate spreads, contain high amounts of liquid oil to obtain the typical soft and spreadable end product. In each of these examples fat is combined with at least one powdery ingredient (for example sugar, milk powder, cocoa powder, etc..).

Depending on the intended application and the final structure envisaged for the application, a fat will be chosen with a specific Solid Fat Content (SFC) as a function of temperature. Typical SFC-profiles for different applications are illustrated in EP-A-739.589 table 22a. The SFC-profile depends mainly on the nature of the fatty acids making up the (tri)glycerides of the fat, on the triglyceride composition, and on the method used to solidify the fat - in particular the crystallisation time and temperature, whether the product has been subjected to tempering or not, etc. Whether a fat at a certain temperature is liquid or solid is determined not only by the chain length of the fatty acids, but in particular by the type of fatty acid, i.e. whether it is saturated or non-saturated, and in case of non-saturated fatty acids, the type of isomer, cis or trans. For products that need a rather firm structure, usually a fat with a rather high SFC-profile will be selected, meaning that the fat will have a quite high amount of saturated fatty acids and/or trans isomers of non-saturated fatty acids. Saturated fatty acids (SAFA) are abundantly present in natural fats like cocoa butter, palm oil, palmkernel oil, coconut oil, tallow, etc.. Trans fatty acids (TFA) of natural origin are mainly found in ruminant fats. Natural vegetable oils and fats do not contain this trans isomer. Although TFA are unsaturated fatty acids, their structure and melting profile is much closer to that of the corresponding saturated fatty acid than to that of their cis-form.

Although a wide range of hard structural fats suitable for producing structured products is naturally available, there is still a big need for fats with a solid structure and a major fatty acid chain ranging from C14 to C20. To obtain such fats, hydrogenation of liquid oils like soy, rapeseed, sunflower, groundnut oil to hard fats has been widely used. Hydrogenation also called "hardening" of the liquid oils and fats is usually carried out in the presence of a catalyst. However, the hydrogenation not only involves conversion of unsaturated fatty acids into saturated fatty acids, but also conversion of cis-unsaturated fatty acids into trans-isomers. Both the increased amount of SAFA and TFA contribute in converting the liquid oil into a hard fat upon hydrogenation. However, although from a functional point the use of a fat with a rather high amount of SAFA and/or TFA will be recommended to obtain the desired structure, from a nutritional point it is highly preferred to limit the amount of these fatty acids. It has been demonstrated that consumption of SAFA and TFA increases the risk to the occurrence of cardiovascular diseases. Therefore official instances, like WHO, have issued maximum recommended levels of daily intake of SAFA and TFA. Studies on the consumption patterns of fats in food, like the so-called Transfair study, conducted in a number of European countries, indicate that the daily intake of both SAFA and TFA is in a large number of countries far too high.

Not only the type of fat present in a food product is of importance for its nutritional profile, but also the amount of fat present. Therefore there is a trend in food industry to develop products with a reduced fat content. However, the possibilities to change the recipes and reduce the fat content, whilst maintaining desirable eating quality, are often quite limited. Another approach to reducing the fat content is to replace the fat by another ingredient often called fat replacer, typically developed to maintain as much as possible the functional and sensoric characteristics induced by the oil or fat present in the original product. Fat replacers may be of different origin: they can be fat-based, without however having the typical triglyceride structure of an oil or a fat, or they can be protein or carbohydrate based. An example of a fat based fat replacer is for instance a diglyceride composition. Inulin is completely different in nature; it is a fat replacer composed of oligo- and polysaccharides which gives a creamy structure and a mouthfeel comparable to the mouthfeel induced by fat. The use of fat replacers not only assists in reducing the SAFA and TFA intake, but it offers also the possibility of reducing the energetic value of the food product.

For certain food products, like chocolate, it is desirable that the product as such has a hard and snappy structure, while it is completely melting at body temperature, without leaving a sensation of waxiness in the mouth. In chocolate, these remarkable characteristics are obtained by the presence of cocoa butter. Cocoa butter has the advantage of being a natural, non-hydrogenated fat, but it has the disadvantage of containing about two thirds of saturated fats, which is easily understandable from its typical symmetrical SUS-triglyceride structure (S = Saturated fatty acid; U = Unsaturated fatty acid).

There is thus a need to food systems and food products which have a hard structure comparable to chocolate, which have a reduced fat content and contain glycerides with a limited level of SAFA and/or TFA. There is also a need to food systems and food products which exhibit the typical properties of chocolate, being good melting in the mouth, snap and sufficient heat resistance. There is also a need for glyceride compositions and fat replacers suitable for use in combination with each other, which enable producing food products with such a hard structure, but a limited level of SAFA and/or TFA. There is further a need to a process for producing such compositions and combinations.

### Description of the prior art.

From EP-A-719.090 healthy fats are known with a saturated fatty acid content less than 35 wt. %, for use in spreads or margarine. The fats further contain 5-45 wt. % S2U, 0-60 wt. % SU2, 5-95 wt. % U3 and 0-8 wt. % S3. The diglyceride content is less than 5 wt. % as it is believed that the presence of diglycerides in margarine fats has a negative impact on the crystallization behavior. The fats disclosed in EP-A-719.090 are characterized by a flat SFC-profile which is typical for margarines, expressed as (N5-N20) being less than 10, where N5 and N20 mean the SFC at respectively 5 and 20°C. The structuring properties provided by the fat composition of EP-A-719.090 are mainly attributed to the presence of 1.5 - 4 wt. % of behenic acid in the fat. Water in oil emulsions prepared from these fats show a good hardness. When producing the spread, the fat, water and some of the other ingredients and additives are mixed and pasteurized at 85°C, followed by a cooling and crystallization process.

EP-A-875.152 relates to lamination fats with improved lamination properties, good structuring properties, in particular a good hardness and a low saturated fatty acid content. According to EP-A-875.152 this is achieved by the presence of a minimum amount of long chain fatty acids in the triglycerides, in particular by the presence of a minimum amount of arachidic and behenic acid. The fat blend further comprises 70 - 85 wt. % of a liquid oil and at least 15 wt. % of (H2M+H3) triglycerides, and has a saturated fatty acid content of less than 50 wt. %, a N35 < 35 and an N20 of 15-40 wt. %. In the above, H designates saturated fatty acids with at least 16 carbon atoms, M designates saturated fatty acids with 6-14 C atoms. The blend is characterised by a certain minimum Stevens hardness so that it suitable for use in puff pastry. The Stevens hardness of the fat blend, which is the hardness measured at 20°C with a Stevens Texture Analyzer using a cylindrical probe of 4.4 mm diameter, is at least 150g, preferably between 150 and 800g. The SAFA-content of the fat blends disclosed in the examples ranges from 29 to 35.2 %, the solid fat content at 35°C ranges from 10.6 to 23.3%.

EP-A-687.142 discloses bakery fats with a saturated fatty acid content of less than 40 wt. %, a trans fatty acid content of less than 5 wt. %, a N20 of at least 10%, a S2U content of 5 - 50 wt. %, a (U2S+U3) content of at least 35 wt. % and a S3 content of 0-37 wt. %. It is explained that the properties of the baked products are at least similar to those of products having a higher saturated fatty acid content. To achieve this, the dough fat contains a fat component A which is rich in SUS-triglycerides and preferably contains 5-30 wt. % of behenic acid. From the examples it can be seen that preparation of the dough is done by blending the molten fat components, followed by cooling the melt and cool storage overnight, so as to obtain a plasticised fat which is suitable for mixing with the remaining dry ingredients of the dough and water.

EP-A-731.645 discloses blends of a sugar and a triglyceride component with a SAFA content which is lower than usual, i.e. below 45 wt. %. The triglyceride component comprises at least 40 wt. % of SU2 and 3-50 wt. % of S2U, it is free of TFA and has an N20 of at least 35 and an N30 of less than 10. It is explained that the triglyceride component contains at least 10 wt. % of behenic acid, that the triglyceride component contains less than 25 wt. % of StUSt (U = Unsaturated Fatty Acid; St = C18-0) and that the presence of 0.1 to 10 wt. % of trisaturated triglycerides, especially from palm oil stearin, gives better structuring properties. The blends are suitable for use in filling fats and ice cream coatings. Regardless of their limited SAFA-content, the blends display a good product performance, meaning an acceptable texture, a sufficiently high hardness and good oral melting characteristics. The fillings and coatings are prepared by mixing the ingredients, roll-refining and conching, followed by a cooling process (called "tempering") to below 20°C, preferably below 15°C. During the cooling process a working amount of fat seeds, e.g. cocoa butter seeds may be added. In the examples it is explained that after cooling and storing of the fillings at low temperature for longer periods (e.g. 16 hrs. at 7°C followed by 1 week at 13°C or 18 hrs at 13°C in case a seeding agent was used), an acceptable hardness was found. Example 4 discloses a filling fat with a Stevens' hardness at 20°C of 158 g, the filling contained 50 wt. % of fat, the fat contained 41.7 wt. % of SAFA.

From EP-A-1.543.728 a fatty thickening composition is known, which is suitable for thickening a fat based composition. The thickening composition contains between 15 and 45 wt. % of at least one hydrogenated fat and between 85 and 55 wt. % of at least one liquid oil. The hydrogenated fat is preferably a fully hydrogenated fat with at least 15 wt. % of fatty acids having more than 18 carbon atoms, preferably maximum 22 carbon atoms. The preferred hydrogenated fat is hydrogenated high erucic acid rapeseed oil. According to example 1, cooling of a blend of 25 parts fully hydrogenated high erucic acid rapeseed oil with 75 parts of rapeseed oil gives a solid final product.
All of the above-mentioned patent publications address the problem of providing a structuring fat composition which is low in SAFA, which displays an acceptable hardness and is suitable for use in a final product. However, each time this problem is solved by the use of a fat component which contains behenic and/or arachidic acid, i.e. long hydrocarbon chain fatty acids as the structuring agent. Behenic acid is mostly obtained by hydrogenation. Triglycerides containing one or more of these fatty acids risk to create a waxy mouth feel upon eating, caused by their high melting point, as can be seen by their high solid fat content at 35°C. To avoid the presence of high melting triglycerides, containing more than one of these long chain fatty acids, chemical or enzymatic interesterification is often applied, followed by fractionation. However, this is a complicated and expensive production method. On top of that, sources of behenic and arachidic acid are quite expensive, as their availability is quite limited.

EP-A-424.997 describes cocoa butter fractions, obtained by solvent fractionation, using acetone or hexane as a solvent. EP-A-424.997 discloses combining the stearin fraction obtained from the fractionation with a palm mid fraction, with the purpose of producing a replacer fat for at least part of the standard cocoa butter in confectionery applications. EP-A-424.997 disclose to use such fractions in low SAFA applications.

EP-A-426.155 discloses a hard butter composition, which comprises a triglyceride component comprising triglycerides having unsaturated fatty acid residue at the 2-position and a diglyceride component comprising at least one diglyceride having at least two unsaturated bonds in one molecule. The hard butter composition is stable to heat at around its melting point, it is soft at a low temperature range, has a heat resistance, resistance to blooming and softness in chewing when used as a component of chocolates. The glycerides compositions disclosed in EP-A-426.155 contain preferably 70 to about 95 wt. % of triglycerides and preferably 5 to about 30 wt. % of diglycerides. This combination of di- and triglycerides contributes to the softness of a chocolate product at low temperatures, i.e. at temperatures from about 5 to 20°C. EP-A-426.155 seeks to produce hard butters which are soft at low temperature range. EP-A-426.155 does not envisage making a chocolate which is hard and snappy at room temperature, and which contains a reduced level of SAFA. EP-A-426.155 does not disclose any process, operating conditions or product combinations which would permit achieving a hard and snappy chocolate. This is understandable in view of the object of EP-A-426.155, which is to make a product that is soft at room temperature.

### Object of the invention.

There is thus a need for glyceride containing non-baked food products, which not only have a limited fat content, but also a limited content of saturated and/or trans fatty acids, which show a hardness that is sufficiently high and appropriate for the intended application. There is also a need to a process for producing such non-baked food products.

It is therefore an object of the present invention to provide non-baked food products with a hard and snappy texture, a good mouthfeel, a good taste, a good heat resistance and a good nutritional profile. In particular it is an object of this invention to provide a non-baked food product with a harder structure than could be expected on the basis of its fat content and/or the glyceride composition contained in it, in particular on the basis of the saturated and trans fatty acid content.

It is a further object of this invention to provide a process for the production of such a non-baked food product, showing a sufficient hardness, at a fat content and at concentration of saturated and trans fatty acids that is significantly smaller than can be expected from the prior art knowledge.

### Description of the invention.

This object is achieved according to the present invention, with a food product showing the technical features of the characterizing part of the first claim.

Thereto, the food product of this invention is characterised in that it has a hard texture at room temperature and contains
- between 5 and 90% of a fat phase
- between 3 and 70% of a fat replacer
- between 0 and 15% of water
- between 0 and 85% of a filler material
   whereby the fat phase contains at least one fat composition containing
- between 0 and 65 wt% of at least one liquid oil with a saturated fatty acid content of less than 25 wt. % with respect to the weight of the liquid oil
- between 35 and 100 wt. % of a hard fat component with a StOSt/POP ratio of at least 2, preferably at least 2.5, most preferably at least 3.0, wherein St is stearic acid, P is Palmitic acid and O is Oleic acid.
and whereby the weight ratio of the fat replacer content versus the fat content in the total product is at least 0.1, preferably at least 0.15, more preferably at least 0.2.

In the above, fat replacer means an ingredient with a chemical structure that is different from a triglyceride, which is capable of replacing fat and gives texture and mouthfeel to the final product with an acceptable similarity as compared to the fat based reference product, i.e. the reference product in which the fat has not been replaced.

In the above filler material means a non-glyceride edible solid material, preferably present in dry, powdery form. Suitable filler materials include sugar, cocoa powder, full or skimmed milk powder, whey powder, flour, starch, food grade organic and inorganic powders,etc...

Preferred food products contain between 10-50 wt.% of fat plus fat replacer with respect to the total weight of the food product, preferably 15-40 wt. %, more preferably 20 - 35 wt.%. Examples of such food products are chocolate products like tablets or couvertures. The term "chocolate" designates products such as chocolate according to the Codex Alimentarius definition, but also chocolate imitation products containing fats or fat replacers that can fully or partially replace cocoabutter.

Food products that are snappy are characterised by the fact that they break at the first bite. The inventors have found that such products show tendency to crack when texture is measured at room temperature (20°C +/-1°C), using an SMS-texturemeter equipped with a cylindrical steel probe with a diameter of 3mm and a flat bottom. Soft products on the other hand can be penetrated with the probe without breaking.

Fat replacers can be of different origin. Fat replacers can be fat based, without necessarily having the triglyceride structure of an oil or a fat, or they can be protein or carbohydrate based. Very effective fat replacers within the food product of this invention are those containing between 10 and 100 wt. % of diglycerides. Preferably the diglyceride content is between 90 and 100 wt. % on fat replacer weight basis. The best results are obtained with diglycerides having a saturated fatty acid content of less than 30 wt. %, preferably less than 20 wt. %, more preferably less than 15 wt. %, most preferably less than 10 wt. %. This also leads to a low SAFA-content in the final product.

The saturated fatty acid content on total glyceride phase in the food product is preferably below 57 wt. %, preferably below 55 wt. %, preferably less than 53 wt. %, more preferably less than 50. In order to obtain hard and snappy products which give a good melting in the mouth, preferably the saturated fatty acid content will be higher than 35, more preferably higher than 40, most preferably higher than 45 wt. %.

The food products according to this invention are preferably tempered products. This ensures maximum hardness and no graininess through re-crystallisation of the fat.

Preferred hard fat components for use with the present invention include cocoa butter stearine, shea stearine, illipe, sal stearin, mango stearine, kokum fat, allanblackia fat or an enzymatically prepared fat containing at least 60 wt% of SUS triglycerides or a blend of two or more of the afore mentioned fats or fractions thereof. Herein S means saturated fatty acids having 16-18 carbon atoms and U means unsaturated fatty acids having 18 carbon atoms or more

Fractionation can be dry or solvent fractionation. All these products have a relatively high amount of StOSt and a limited content of POP.

Most preferred is a hard fat component consisting of a hard cocoa butter fraction, obtained through dry or solvent fractionation, in particular the stearin fraction. The purpose of this fractionation is to increase as much as possible the StOSt-level in the cocoa butter part and to decrease the POP-level. This was found to have a very positive effect on texture. A reason to use this type of fat is that the amount of cocoa solids in the chocolate like product remains quite high. This can be an advantage for product labeling.

Optimum hardness and snappy texture, with simultaneously a reduced level of saturated fatty acid could be obtained with hard fat component having a content of StOSt-triglycerides between 60 and 85 wt. %.

The inventors have found that a product with an optimum balance between hardness and snap on the one hand and cool melting properties in the mouth on the other hand can be obtained if the hard fat component contains both sufficiently StOSt- and POSt-triglycerides. Apparently StOSt creates more hardness, whereas POSt gives a nicer mouthfeel. The optimum between both properties is obtained if the POSt/StOSt ratio varies between 0.3 and 1.1, preferably between 0.5 and 0.9.

Preferred liquid oil components for use in the food product of this invention include at least one vegetable oil selected from the group of rapeseed oil, corn oil, soy oil, standard or high oleic sunflower seed oil, cotton seed oil, maize oil, olive oil, hazelnut oil, groundnut oil, liquid fractions of palm oil or shea butter, a fraction of one of these liquid oils or one or more fractions thereof or a blend of two or more of the afore mentioned oils and/or fractions.

In order to obtain a food product with a good taste and structure, some liquid oils are preferred over others. It was found that preferably the ratio of the C18-3 content on total fat in the product over the sum of C18-2+C18-3 is less than 0.25, preferably less than 0.15, most preferably less than 0.05. Oils that can be used to fulfil such requirement are for instance sunflower oil, high oleic sunflower oil, groundnutoil, hazelnutoil. An oil that does not fulfil this requirement is rapeseedoil. Results in terms of taste and structure were found to be less satisfactory with this oil.

The use of hydrogenated fats in the food product of this invention is preferably avoided, as hydrogenated fat have a bad connotation and are often linked with unhealthy fats with a high trans fatty acid content.

One of the important parameters in categorizing chocolate products is the content of total cocoa solids. With cocoa solids is meant the amount of fat free cocoa solids combined with the amount of cocoa butter. For certain products, the minimum amount of solid components originating from cocoa required is 20, 25 or 35 wt. %. Therefore it can be an advantage to have these minimum levels present in the product, according to the invention. We found it to be possible to reduce the amount of saturated fatty acid and still maintain a high amount of cocoa solids, by using a substantial amount of cocoa butter stearine in the recipe.

In order to obtain a hard texture, it is important that the filler material in the form of dry powdery ingredients, contained in the recipe, has a small particle size. Preferably the food product contains dry, filler material with a particle size of less than 15 µm in an amount of at least 30 wt. % with respect to the weight of the filler material present, more preferably at least 50 wt. %, most preferably at least 70 wt. %, the percentages being expressed on fat free basis.

The texture of the food product of the present invention may be further improved by incorporation of texturising or emulsifying agent or a combination of such agents. Examples thereof include mono- and diglycerides, sorbitan tristearate, animal and vegetable proteins (milk, soy, wheat, ..), gelatine, pectine, starch, agar, xanthane gum, carrageen, alginates, guar, cellulose based materials, etc..

Certain additives have a positive effect on the texture of the food product of this invention since they limit the growth of fat crystals. It is believed that this has a beneficial effect on the structure. Additives used for this purpose, mostly belong to the product classes of gums, polysaccharides, proteins of vegetable or animal origin, emulsifiers or a combination thereof. Preferably the amount added ranges from 0.05 to 5.0 wt. %, relative to the total weight of the food product.

The inventors have further observed that the addition of mineral powders or salts, containing Ca, Mg, K, Fe, Si or P has a positive effect on the hardness of the final product obtained. The amounts added typically range from 0.05 to 5.0 wt.% on total product basis. Preferably the average particle size of these mineral powders or salts is less than 15 µm, preferably less than 10 µm, more preferably less than 5 µm.

The present invention also relates to a process for producing the above-described food product. This process comprises the steps of blending
- between 0 and 65 wt% of at least one liquid oil with a saturated fatty acid content of less than 25 wt. % with respect to the weight of the liquid oil
- between 35 and 100 wt. % of a hard fat component with a StOSt/POP ratio of at least 2, preferably at least 2.5, most preferably at least 3.0.
to provide a fat phase and blending between 5 and 90 wt. % (wt. % being on total product basis) of the fat phase with 3-70 wt. % of a fat replacer, 0-85 wt. % of a filler material and 0 - 15 wt. % of water, followed by subjecting the thus obtained mixture to a tempering step. The filler material includes sugar, cocoa powder, full or skimmed milk powder, whey powder, flour, starch, food grade organic and inorganic powders, etc...The tempering step to stabilise the fat is followed by cooling the product, mostly a forced cooling step.

In most cases tempering will be done by means of a tempering machine. In this equipment the product is first cooled, followed by a slight heating in order to melt unstable crystals, followed by a final cooling in order to obtain a product that is stabilised and still can be poured in moulds or to cover products like biscuits.

Tempering can also be achieved by the use of a temper seeding agent containing at least 50 wt% SUS triglycerides on its total fat basis. In this case the temper seed which contains SUS-triglycerides in the stable form will act as a seeding agent for the liquid fat to crystallise also in the stable form. With stable form is meant the type Beta V or VI, as defined by Wille& Luton.

The process of this invention preferably contains at least one step for reducing the size of any fat crystals present in the food product, the fat crystal size reduction step being carried out before or during solidification of the food product.

Fat crystal size reduction can be done using any method considered suitable by the person skilled in the art. Suitable methods include high speed mixing, high speed scraping, subjecting the food product to vibrations or ultrasonic treatment, or a combination of two or more thereof.

According to another preferred embodiment of this invention, at least one refining step is carried out before, during or after preparation of the blend of ingredients, to reduce the size of any solid material present. This size reduction has the effect that the hardness of the final food product is increased. In this context, refining means process steps like for instance grinding, roll refining, etc. or any equivalent process known to the person skilled in the art capable of reducing the particle size of solid materials present in the recipe. For instance, it is possible to fine grind the sugar used in the recipe in advance before blending with the other ingredients, or to grind the sugar together with other ingredients like cocoa powder or milk powder, possibly after having added some fat to facilitate the grinding process, like for instance roll refining.

The present invention also relates to a process for preparing a fat phase for use in the above described food product, comprising the steps of blending
- between 0 and 65 wt% of at least one liquid oil with a saturated fatty acid content of less than 25 wt. % with respect to the weight of the liquid oil
- between 35 and 100 wt. % of a hard fat component with a StOSt/POP ratio of at least 2, preferably at least 2.5, most preferably at least 3.0.
Preferably the fat phase is blended with an mount of a fat replacer, in a weight ratio fat replacer versus fat of at least 0.1, preferably at least 0.15, most preferably at least 0.2.

The present invention is further illustrated in the examples described below.

### Examples.

### Example 1.

Three chocolate masses were prepared using the recipe in table 1 below. The chocolate mass was prepared by blending the cocoa powder, the sugar and part of the fat, followed by roll refining the mixture, and treating the mixture in a conche at 50°C where the residual fat was added and mixed into the blend.

The particle size after roll refining was controlled by measuring the sample with a micrometer to determine the maximum diameter of the particles. The results varied from 24 to 26 µm.

**Table 1.**

| | |
|---|---|
| Cocao powder | 15% |
| sugar | 50% |
| fat + fat replacer | 35% |
| lecithin | 0,10% |

Based on this recipe, three chocolate masses were prepared as described below. Two masses contained a fat component, a third mass was prepared using a diglyceride component.

Mass 1 was prepared using as a hard fat component an enzymatically prepared StOSt-type fat, with an StOSt-content of 67.5 wt. %, an StOSt/POP ratio of 135 and a POSt/StOSt ratio of 0.17. Mass 2 was prepared by using as a hard fat component an Illipe fat with an StOSt-content of 41.7wt%, an StOSt/POP ratio of 3.7 and an POSt/StOSt ratio of 0.86. Mass 3 was prepared using a diglyceride composition as fat replacer. The diglyceride product is known under the name Econa. It contained 4.8 % SAFA and is liquid at room temperature.

Four samples were prepared using the above-described masses 1-3, as follows.

To prepare sample 1 an amount of mass 1 was blended with an amount of mass 3, in such a ratio that the SAFA-content of the blend expressed on its total glyceride content was 50 wt.%. The ratio of the amount of fat replacer versus the amount of hard fat was 0.29.

To prepare sample 2 an amount of mass 2 was blended with an amount of mass 3, in such a ratio that the SAFA-content of the blend expressed on its total glyceride content was 50 wt.%. The ratio of the amount of fat replacer versus hard fat was 0.33.

Sample 3 was prepared by blending an amount of mass 1 with an amount of mass 3, in such a way that the SAFA-content of the blend expressed on total glyceride content was 35 wt. %. The ratio of the amount of fat replacer versus hard fat used in this sample was 0.94.

Sample 4 was prepared by blending an amount of mass 2 with an amount of mass 3, in such a way that the SAFA-content of the blend expressed on total glyceride content was 35 wt. %. The ratio of the amount of fat replacer versus hard fat used in this sample was 0.98.

Sample 1 and 2 are products made according to the present invention. Samples 3 and 4 are comparative examples.

The above described chocolate blends were made at 45-48°C. The thus obtained blends were then tempered by cooling to 30°C and adding 0.2 wt. % of Chocoseed A on total product basis. Chocoseed A is a product of Fuji Oil containing a minimum working amount of SUS-triglyceride, crystallised in the Beta-form. The chocolate mass was poured in moulds to make tablets and cooled for 30 minutes at 15°C, followed by demoulding and storage for 1 week at 20°C to stabilise. The thickness of the tablets was 7 mm.

After 1 week the tablets were tasted by a test panel, their texture was measured with an SMS-texture meter, using a probe of 3 mm diameter, speed 0.5 mm/sec. To measure the texture, the tablets were put on a metal ring of 8 mm height, so that the bottom of the tablet, at the area where the probe penetrates, did not touch the surface of the measuring table of the instrument. The texture corresponds to the maximum resistance measured before cracking or full penetration of the tablet by the probe. The results obtained are given in table 2.

**Table 2.**

| | SAFA | Texture (g) |
|---|---|---|
| sample 1 | 50% | 4591 |
| sample 2 | 50% | 4025 |
| sample 3 | 35% | 1806 |
| sample 4 | 35% | 1627 |

The results of the evaluation of the low SAFA chocolate samples 1-4 by the test panel were as follows. Samples 1 and 2 were found to be hard and snappy, sample 2 was clearly considered as the one with the best mouthfeel, with very clean and cool melting properties. Sample 1 contains a hard fat with very high StOSt-content, which leads to the hardest structure, sample 2 contains a considerable amount of POSt and gives the best mouthfeel combined with an acceptable hardness. Samples 3 and 4 were considered as " soft, too plastic and not snappy". Contrary to sample 1 and 2, samples 3 and 4 did not break during the texture measurement. The probe of the texture meter was only capable of producing a hole in the tablet and passed through the tablet without fragmenting it. This observation is in line with the observation of the panel that these products were not snappy.

Although the saturated fatty acid content of the fat in the chocolate samples 1 and 2 was clearly lower than the one in standard chocolate, a chocolate product was obtained with a texture quite comparable to chocolate products made with standard cocoa butter. Important is that samples 1 and 2 contained less fat than standard chocolate.

## Claims

1. A food product with a hard texture at room temperature, containing
- between 5 and 90% of a fat phase
- between 3 and 70% of a fat replacer
- between 0 and 15% of water
- between 0 and 85% of a filler material
whereby the fat phase contains at least one fat composition containing
- between 0 and 65 wt% of at least one liquid oil with a saturated fatty acid content of less than 25 wt. % with respect to the weight of the liquid oil
- between 35 and 100 wt. % of a hard fat component with a StOSt/POP ratio of at least 2, preferably at least 2.5, most preferably at least 3.0, wherein St is stearic acid, P is Palmitic acid and O is Oleic acid.
and whereby the weight ratio of the fat replacer content versus the fat content in the total product is at least 0.1, preferably at least 0.15, more preferably at least 0.2.

2. A food product as claimed in claim 1, **characterized in that** the sum of the amount of fat and fat replacer contained in the food product ranges between 10-50 wt.%, preferably 15-40 wt. %, more preferably 20 - 35 wt.%.

3. A food product as claimed in claim 1 or 2, **characterised in that** the fat replacer contains between 10 and 100 wt. % of diglycerides, with respect to the amount of fat replacer, preferably between 90 and 100 wt%.

4. A food product as claimed in claim 3, **characterised in that** diglycerides have a saturated fatty acid content of less than 30 wt. %, preferably less than 20, more preferably less than 15, most preferably less than 10 wt. %.

5. A food product as claimed in any one of claims 1-4, **characterised in that** the food product contains less than 57 wt. %, preferably less than 55 wt. %, more preferably less than 53 wt. % most preferably less than 50 wt. % of saturated fatty acids with respect to the total weight of the glyceride phase.

6. A food as claimed in any one of claims 1-5, **characterised in that** the food product is a tempered product.

7. A food product according to any one of claims 1-6, **characterised in that** the hard fat component comprises a fat selected from the group of cocoa butter stearine, shea stearine, illipe, sal stearin, mango stearine, kokum fat allanblackia fat or an enzymatically prepared fat containing at least 60 wt.% of SUS triglycerides or one or more fractions of such fats or a blend of two or more of the afore mentioned fats, wherein S means saturated fatty acids having 16-18 carbon atoms and U means unsaturated fatty acids having 18 carbon atoms or more.

8. A food product as claimed in any one of claims 1- 7, **characterised in that** the hard fat component consists of a hard cocoa butter fraction, obtained through dry or solvent fractionation.

9. A food product as claimed in any one of claims 1-7, **characterised in that** the hard fat component consists of a fat with a content of StOSt-triglycerides between 60 and 85 wt.%.

10. A food product as claimed in any one of claims 1-8, **characterised in that** the hard fat component consists of a fat with a POSt/StOSt ratio varying between 0.3 and 1.1, preferably between 0.5 and 0.9.

11. A food product as claimed in any one of claims 1-10, **characterised in that** the at least one liquid oil component comprises at least one vegetable oil selected from the group of rapeseed oil, corn oil, soy oil, standard or high oleic sunflower seed oil, cotton seed oil, maize oil, olive oil, hazelnut oil, groundnut oil, liquid fractions of palm oil or shea butter, a fraction of one of these liquid oils or one or more fractions thereof or a blend of two or more of the afore mentioned oils and/or fractions.

12. A food product as claimed in any one of claims 1-11, **characterised in that** the glyceride phase contains fats containing C18-3 and C18-2 fatty acids in such an amount that the ratio of the total C18-3 content of the fat phase over the sum of C18-2+C18-3 is less than 0.25, preferably less than 0.15, more preferably less than 0.05.

13. A food product as claimed in any one of claims 1-12, **characterised in that** the food product is free of hydrogenated fat components.

14. A food product as claimed in any one of claims 1-13, **characterised in that** the food product contains at least 15wt%, preferably at least 20 wt. %, more preferably at least 25 wt. %, most preferably at least 35 wt% of solid components originating from cocoa.

15. A food product as claimed in any one of claims 1-14, **characterised in that** at least 30 wt. % of the filler material has a particle size of less than 15 µm, preferably at least 50 wt. %, more preferably at least 70wt. %, percentages being expressed on fat free basis.

16. A food product as claimed in any one of claims 1-15, **characterised in that** the food product contains an amount of a texturising or emulsifying agent or a combination thereof.

17. A food product as claimed in any one of claims 1-16, **characterised in that** the food product contains an amount of a fat crystal growth limiting agent.

18. A food product as claimed in claim 17, **characterised in that** the crystal growth limiting agent is present in a concentration of 0.05 to 5.0 wt.% based on total food product weight.

19. A food product as claimed in claim 17 or 18, **characterised in that** the crystal growth limiting agent is selected from the group of gums, polysaccharides, proteins of vegetable or animal origin, emulsifiers, polymers or a combination of two or more of those products.

20. A food product as claimed in any one of claims 1-20, **characterised in that** the food product contains 0.05 - 5.0 wt.% on total food product basis of a salt or mineral powder containing Ca, Mg, K, Fe, Si, P or a combination thereof.

21. A food product as claimed in claim 20, **characterised in that** the average particle size of the salt or mineral powder is less than 15 µm, preferably less than 10 µm, more preferably less than 5 µm

22. A process for producing the food product according to any one of claims 1-21, **characterised in that** the process comprises the steps of blending
- between 0 and 65 wt% of at least one liquid oil with a saturated fatty acid content of less than 25 wt. % with respect to the weight of the liquid oil
- between 35 and 100 wt. % of a hard fat component with a StOSt/POP ratio of at least 2, preferably at least 2.5, most preferably at least 3.0. to provide a fat phase and blending between 5 and 90 wt. % on total product basis of the fat phase with 3-70 wt. % of a fat replacer, 0-85 wt. % of a filler material and 0 - 15 wt. % of water, followed by subjecting the thus obtained mixture to a tempering step.

23. A process as claimed in claim 22, **characterised in that** tempering is carried out by adding to the food product a temper seeding agent containing at least 50 wt.% SUS with respect to the fat content of the temper seeding agent.

24. A process as claimed in claim 23, **characterised in that** tempering is carried out using a tempering device.

25. A process as claimed in any one of claims 22-24, **characterised in that** the process contains at least one step in which the size of any fat crystals present is reduced, the fat crystal size reduction step being carried out before or during solidification of the food product.

26. A process according to claim 25, **characterised in that** the fat crystal size reduction step comprises high speed mixing, high speed scraping, subjecting the food product to vibrations or ultrasonic treatment, or a combination of two or more thereof.

27. A process as claimed in any one of claims 22-26, **characterised in that** at least one refining step is carried out before, during or after preparation of the blend of ingredients, to reduce the size of any solid material present

28. A process for preparing a fat phase for use in the food product according to any one of claims 1-21, **characterised in that** the process comprises the steps of blending
- between 0 and 65 wt% of at least one liquid oil with a saturated fatty acid content of less than 25 wt. % with respect to the weight of the liquid oil
- between 35 and 100 wt. % of a hard fat component with a StOSt/POP ratio of at least 2, preferably at least 2.5, most preferably at least 3.0.

29. A process as claimed in claim 28, **characterised in that** an amount of the fat phase is blended with an amount of a fat replacer in a weight ratio fat replacer versus fat of at least 0.1, preferably at least 0.15, most preferably at least 0.2.
